# EUROPEAN PATENT SPECIFICATION

(11) **EP 1 717 064 B1**
(45) Date of publication and mention of the grant of the patent: **12.08.2009**
(21) Application number: 06008888.7
(22) Date of filing: 28.04.2006
(51) Int. Cl.: B60C 25/138

(54) **Tool for fitting and removing vehicle wheel tyres**
Werkzeug für die Montage / Demontage von Fahrzeugreifen
Outil pour le montage/ démontage des pneumatiques

(30) Priority: 29.04.2005 IT MO20050105
(43) Date of publication of application: 02.11.2006
(73) Proprietor: SICAM S.r.l., 42015 Correggio (Reggio Emilia) (IT)
(72) Inventor: Boni, Dido, 42100 Reggio Emilia (IT); Matteucci, Marco, 42010 Rio Saliceto (RE) (IT); Mazzali, Paolo, 41012 Carpi (MO) (IT)
(74) Representative: Brogi, Graziano

(56) References cited:
- EP-A- 0 838 354
- DE-B- 1 139 045
- FR-A- 1 333 160
- GB-A- 1 064 527

## Description

The present invention refers to a tool for fitting and removing vehicle wheel tyres.

It is known that vehicle wheels generally consist of a cylindrical metal rim featuring, at the axial ends, annular folds between which a slot-in fitting channel is defined for an elastic tyre, the side sections of which, the so-called "beads", are tightly fitted up against the annular folds.

Inside the tyre, an inner tube can be fitted or, in the case of "tubeless" type tyres, air under pressure can be directly introduced.

To perform the tyre fitting and removal operations onto and off the relevant rims, so-called tyre-changing machines are currently used that make it possible to remove the tyre from the relevant rim to carry out, for example, maintenance jobs or to replace the inner tube, the rim and/or the tyre itself, and then fit the same tyre or a replacement tyre back on the wheel rim.

Many types of wheel-changing machines exist, of different shapes and sizes depending on the size of the rims and tyres to be fitted/removed.

A particular type of tyre-changing machine is essentially made up of a support frame for means of gripping and rotating the rim of a wheel being worked on, and for a tool arm on which is fitted a tool for fitting and removing the tyre onto and off the rim.

Such tool, in particular, is fitted between the tyre beads and the corresponding annular folds of the rim to detach these, during removal, and to press on the beads inside the channel defined between the annular folds, during fitting.

The tool features a pair of bead pressers combined integrally in a single rigid body, made of metal or plastic.

One of these bead pressers is normally shaped like a tang, meaning it is extended in an orthogonal direction to the rotation axis of the rim and features a substantially sharp end.

The other bead presser on the other hand can be shaped like a roller or, alternatively, like an extended wing in an orthogonal direction to the rotation axis of the rim different to that of the tang.

These traditional type tools are not without drawbacks among which the fact that, in some use configurations, they are not very functional and practical. Considering that the known tools are made in a single rigid body in fact, the angle and the relevant distance between the tang and the roller, or between the tang and the wing, are set during manufacture.

Once fitted between the rim and the bead of the wheel being worked on therefore, they are unable to adapt correctly to the curvature of the rim. In some cases, for example, the bead pressing part shaped like a tang may have an end placed awkwardly distant from the annular fold of the rim and, consequently, it could cause excessive deformation of the tyre with which it is in contact, with the risk of ruining it.

Similarly, depending on the distance between the bead pressing parts, the thrust action of the tool can involve too large, or too small a surface of the tyre bead.

For this reason, each traditional tool can only be used on a small range of rims depending on their diameters.

To be able to operate correctly on wheels of very different sizes and avoid damaging the bead, it is therefore necessary to have at disposal several different tools, which, awkwardly, must be fitted/removed on/from the tyre-changing machines every time use is required, thus wasting a lot of time.

Are here also mentioned the embodiments disclosed by patent documents DE 1.139.045, FR 1.333.160 and GB 1,064,527, concerning machines and tools, for the changing of tyres, which are equipped with means suitable for adjusting, with respect to a wheel rim, the position of the presser parts that are provided for cooperating with the beads of a tyre, during the tyre changing operations, according to the preamble of claim 1. However even these embodiments are not exempt from drawbacks, and in particular they appear to require further improvement and/or alternative solutions, especially in order to regulate and adjust in a fine and precise way the position of the tyre bead presser parts with respect to wheel rims of different diameters and sizes.

The aim of the present invention is to eliminate the problems complained of above associated with the known technology and devise a tool for fitting and removing vehicle wheel tyres of universal use and suitable whatever the size of the wheel rim.

As part of such technical aim, another purpose of the present invention is to achieve the previous aims with a simple structure, of relatively practical implementation, safe use and effective operation, as well as of a relatively low cost.

This aim and these purposes are all achieved by the tyre-changing machine having the features recited by the main independent claim 1.

Further characteristics and advantages of this invention will appear even more evident from the detailed description of some preferred, but not exclusive, embodiments of a tool for fitting and removing vehicle wheel tyres, illustrated by way of non limiting example in the accompanying drawings, wherein:
figure 1 shows a perspective view of a tyre-changing machine equipped with a tool
figure 2 shows a perspective view of a form of embodiment of a tool not being part of the invention;
figure 3 shows a perspective view of another form of embodiment of a tool
not being part of the invention;
figure 4 shows a perspective view of an alternative form of embodiment of a tool not being part of the invention;
figure 5 shows a perspective view of a further form of embodiment of a tool
not being part of the invention;
figure 6 shows a perspective view of a special form of embodiment of the tool's means of adjustment according to the invention;
figure 7 shows a perspective view of an alternative form of embodiment of the tool's means of adjustment not being part of the invention;
figure 8 shows a perspective view of an embodiment of the tool's means of adjustment according to the invention.

With special reference to such figures, a tool for fitting and removing vehicle wheel tyres has been generally designated by reference numeral 1.

The tool 1 is suitable for being fitted on a tyre-changing machine M equipped with a tool arm B and means of gripping and rotating rim C of a vehicle wheel; such means, in particular, are of the spindle Mn type with rotation axis R substantially vertical, although alternative forms of embodiment of the present invention cannot be ruled out in which such axis is horizontal or otherwise tilted.

The tool 1 comprises an attachment body 2 to arm B of the tyre-changing machine M, a first bead presser part 3 and a second bead presser part 4, that can be associated with the attachment body 2 and able to cooperate together to deform the bead of a tyre to be fitted/removed to/from the rim C.

The attachment body 2 consists of a slab which, in operating position, is kept substantially orthogonal to the rotation axis R.

The shape and dimensions of the first and second bead presser parts 3 and 4 can be different.

The first bead presser part 3, anyway, extends in an orthogonal direction to the rotation axis R and can be associated with the attachment body 2 by interposing the means of rotation 5, of the cylindrical hinge type, around a swinging axis A parallel to the rotation axis R, able to allow the positioning of the part itself in a work configuration in which this is substantially tangent to one of the annular folds of rim C.

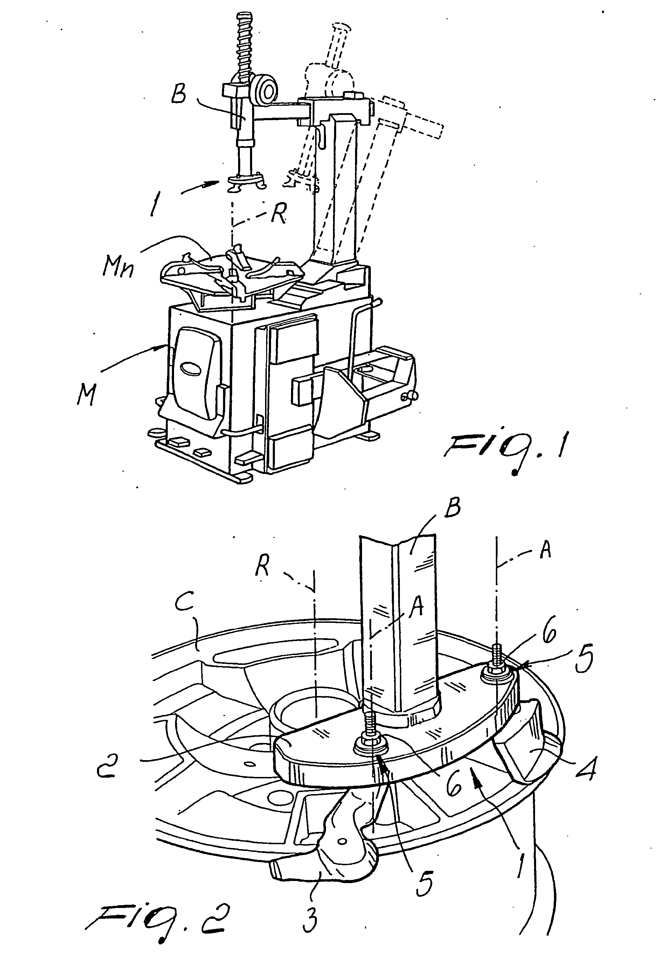

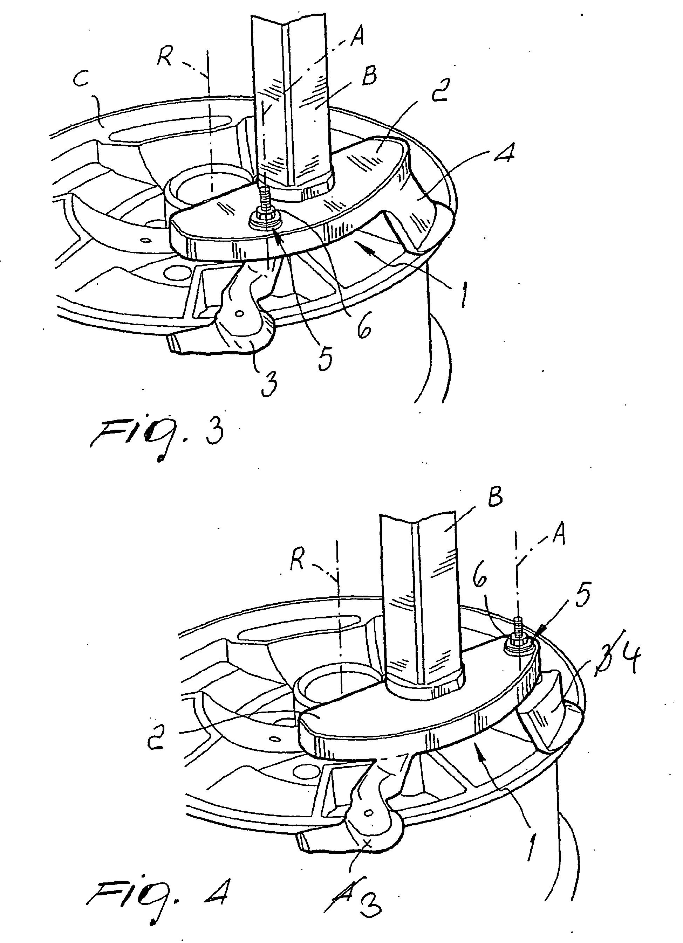

The first bead presser part 3, for example, can be shaped like a tang featuring a sharp tip able to be fitted between the rim C and the base of the tyre bead (figures 2, 3 and 5), or can be shaped like a wing (figure 4); in any case it is fitted on the attachment body 2 so as to turn around the swinging axis A.

The second bead presser part 4 can also be extended in an orthogonal direction to the rotation axis R and eventually be associated with the slab 2 through the means of rotation 5.

The second bead presser part 4, for example, can be shaped like a wing that can turn with respect to the slab 2 (figure 2), with wing integral with the slab 2 (figure 3), or with tang integral with the attachment body 2 (figure 4).

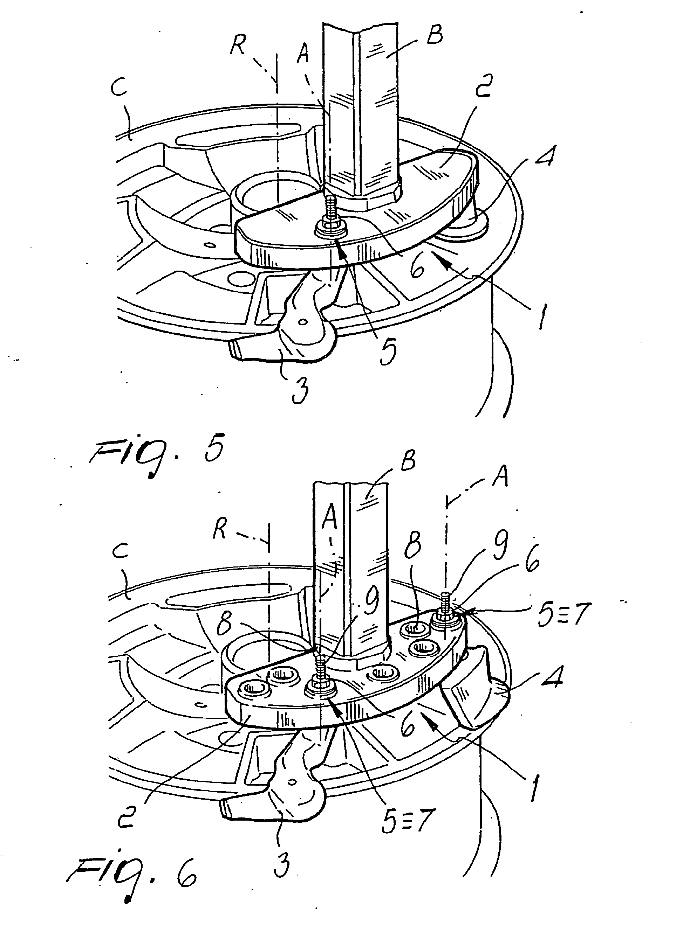

In figure 5, the second bead presser part 4, on the other hand, is shaped like a roller hinged to the slab 2 and able to roll against the tyre during the rotation operation of rim C.

Advantageously, the tool 1 features temporary means of fastening 6 of the first bead presser part 3 and eventually of the second bead presser part 4, in work configuration; these means of fastening, for example, consist of one or more retention nuts or similar.

It cannot be ruled out however that the first bead presser part 3, and eventually the second bead presser part 4, be left free to turn around the swinging axes A, the positioning in work configuration being provided by the crushing of the tyre on rim C during operation.

The bead presser parts 3 and 4 are associated with the slab 2 through means of adjustment 7 of their relevant distance on the orthogonal surface to the rotation axis R.

Such means of adjustment can have different embodiments; in figure 6, for example, these consist of a plurality of holes 8 obtained in the slab 2 at preset relevant distances, inside which a connecting pin 9 can be fitted and secured in a removable way associated with each bead presser part 3 and 4.

The choice of holes 8 inside which to fit the bead presser parts 3 and 4 is made according to the diameters of rim C.

Usefully, the coupling between the holes 8 and the connecting pins 9 is substantially cylindrical, so that the bead presser parts 3 and 4 can turn inside them; in this case the means of rotation 5 and the means of adjustment 7 coincide together.

Obviously, it cannot be ruled out that the second bead presser part 4 is made integral with the slab 2, the adjustment of the relevant distance between the bead presser parts 3 and 4 being provided by the moving of the first bead presser part 3 only.

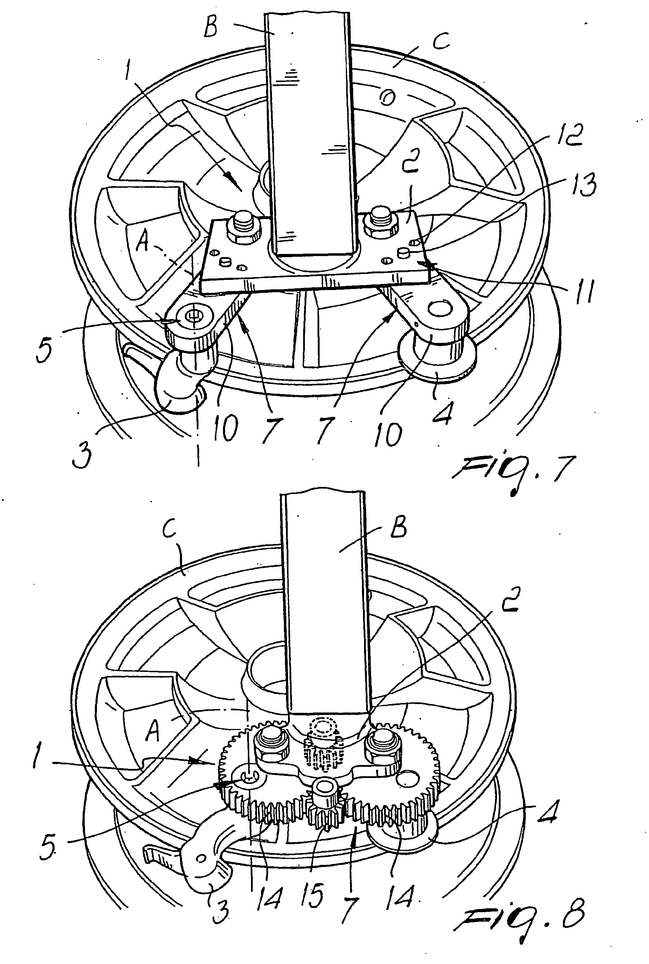

Shown in figure 7, the means of adjustment 7 comprise two plates 10 associated with the attachment body 2 in a way such as to turn around an axis parallel with the rotation axis R and each supporting one of the bead presser parts 3 and 4, so that the rotation of the plates 10 with respect to the attachment body 2 permits moving the bead presser parts 3 and 4 away/closer to one another.

In this form , the means of rotation 5 are placed between the first bead presser part 3, shaped like a tang, and the relevant plate 10, so as to allow its positioning in work configuration, while the second bead presser part 4 is shaped like a roller.

Obviously, it cannot be ruled out that the first and second bead presser parts 3 and 4 have different shapes and dimensions consistently with what has been said before.

The means of adjustment 7 of figure 7 feature first removable means of retention 11 of the rotation of the plates 10 which, for example, comprise a plurality of first through eyelets 12 obtained in the slab 2 and a second through eyelet, not shown in detail in figure 7, obtained in each plate 10.

Such first removable means of retention also include a retention pin 13 for each plate 10, which can be fitted in the corresponding second eyelet and, alternatively, in one of the first eyelets 12 arranged coinciding with the second eyelet.

Once the retention pins 13 have been removed, the plates 10 regain their freedom to turn around themselves thus permitting the adjustment of the relevant distance between the bead presser parts 3 and 4.

In the form of embodiment of the invention shown in figure 8, the means of adjustment 7 comprise two gear wheels 14 locked together and fitted on the slab 2 so as to rotate around axes parallel to the rotation axis R.

The gear wheels 14 each support one of the bead presser parts 3 and 4 and their rotation makes it possible to move one bead presser part 3 and 4 away from/closer to the other.

In this form of embodiment, second removable means of retention 15 of the rotation of gear wheels 14 are envisaged which, advantageously, consist of a toothed spool that can be fitted on the attachment body 2 in a retention configuration in which this is simultaneously engaged with the teeth of the gear wheels 14, so as to prevent their rotation.

Once the toothed spool 15 has been removed, the gear wheels 14 are again free to turn around themselves permitting the adjustment of the relevant distance between the bead presser parts 3 and 4.

In this form of embodiment too, the means of rotation 5 are placed between the first bead presser part 3, shaped like a tang, and the relevant gear wheel 14, while the second bead presser part 4 is shaped like a roller.

Obviously, it cannot be ruled out that the first and second bead presser parts 3 and 4 have different shapes and dimensions consistently with what has been said before.

Many other forms of embodiment are possible of the means of adjustment 7 that are not shown in the figures; in one of these, for instance, the means of adjustment 7 are of the telescopic type and feature two or more tubular sections orthogonal to the rotation axis R which support the bead presser parts 3 and 4 and are fitted so as to slide the one inside the other so as to move the parts away/closer to one another at will.

It has in fact been seen how the described invention achieves the desired purposes and more specifically emphasis is placed on the fact that it is able to adapt easily to the sizes of the rim being worked on and, therefore, the tyre to be fitted/removed undergoes less stress compared to the traditional tools made in a single rigid body.

The invention thus conceived is susceptible of numerous modifications and variations, all of which falling within the scope of the appended claims.

Furthermore all the details can be replaced with others that are technically equivalent.

In practice, the materials used, as well as the shapes and dimensions, may be any according to requirements without departing from the protection scope of the appended claims.

## Claims

1. A tyre-changing machine (M) comprising means of gripping and rotating the rim (C) of a wheel around a rotation axis (R), and a tool (1) for fitting/removing vehicle wheel tyres on/from said wheel rim (C),
wherein said tool (1) comprises at least one attachment body (2) to a tool arm (B) of said tyre-changing machine (M), and at least a first (3) and a second (4) bead presser part, with said first part (3) being extended in a substantially orthogonal direction to said rotation axis (R), that are able to cooperate together to deform the bead of a tyre to be fitted/removed on/from said rim (C),
wherein said first (3) and second (4) bead presser parts are associated with said attachment body (2) by interposing means of rotation (5, 7, 14) around a swinging axis substantially parallel to said rotation axis (R),
said machine (M) being **characterized in that** said means of rotation (5, 7) comprise two gear wheels (14), fitted on said attachment body (2), which can rotate around axes substantially parallel to said rotation axis (R), said two gear wheels (14) being locked together and each supporting a respective one (3, 4) of said bead presser parts,
whereby said means of rotation (5, 7) are able to allow the adjustment and the positioning of said first bead presser part (3) in a work configuration in which it is substantially tangent to one of the annular folds of said rim. (C).

2. Machine (M) according to claims 1, **characterized in that** said means of rotation (7, 5) are associated with removable means of retention (15) of the rotation of said gear wheels (14).

3. Machine (M) according to claim 2, **characterized in that** said removable means of retention comprise a toothed spool (15) that can be associated with said attachment body (2) in a retention configuration in which said toothed spool (15) is simultaneously engaged with the teeth of said gear wheels (14).

4. Machine (M) according to one or more of the preceding claims, **characterized in that** said second bead presser part (4) extends in a substantially orthogonal direction to said rotation axis (R).

5. Machine (M) according to one or more of the preceding claims, **characterized in that** said second bead presser part (4) is substantially shaped like a roller.

## Patentansprüche

1. Eine Reifenwechselmaschine (M), aufweisend Vorrichtungen zum Ergreifen und Drehen der Felge (C) eines Rades um eine Drehachse (R) und ein Werkzeug (1) zum Montieren/Demontieren von Fahrzeugreifen auf/von der Radfelge (C),
bei der das Werkzeug (1) mindestens einen Befestigungskörper (2) an einem Werkzeugarm (B) der Reifenwechselmaschine (M) und mindestens einen ersten (3) und einen zweiten (4) Wulstdrückteil aufweist, wobei der erste Teil (3) in einer im Wesentlichen rechtwinkligen Richtung zur Drehachse (R) verlängert ist, die fähig sind, gemeinsam zusammenzuwirken, um den Wulst eines Reifens, der auf/von der Felge (C) montiert/demontiert werden soll, zu verformen,
bei der der erste (3) und der zweite (4) Wulstdrückteil durch Zwischenschaltung von Vorrichtungen (5, 7, 14) zum Drehen um eine Schwenkachse im Wesentlichen parallel zur Drehachse (R) mit dem Befestigungskörper (2) verbunden sind,
wobei die Maschine (M) **dadurch gekennzeichnet ist, dass** die Drehvorrichtungen (5, 7) zwei am Befestigungskörper (2) angebrachte Zahnräder (14) aufweisen, die um Achsen drehen können, die im Wesentlichen parallel zur Drehachse (R) verlaufen, wobei die zwei Zahnräder (14) miteinander verriegelt sind und jedes von ihnen einen entsprechenden (3, 4) der Wulstdrückteile halten,
wodurch die Drehvorrichtungen (5, 7) fähig sind, die Anpassung und die Positionierung des ersten Wulstdrückteils (3) in einer Arbeitskonfiguration zu erlauben, in der er im Wesentlichen an einer der ringförmigen Falten der Felge (C) anliegt.

2. Maschine (M) gemäß Anspruch 1, **dadurch gekennzeichnet, dass** die Drehvorrichtungen (7, 5) mit einer entfernbaren Haltevorrichtung (15) für die Drehung der Zahnräder (14) verbunden sind.

3. Maschine (M) gemäß Anspruch 2, **dadurch gekennzeichnet, dass** die entfernbare Haltevorrichtung eine gezahnte Spule (15) aufweist, die mit dem Befestigungskörper (2) in einer Haltekonfiguration verbunden werden kann, in der die gezahnte Spule (15) gleichzeitig in die Zähne der Zahnräder (14) greift.

4. Maschine (M) gemäß einem oder mehr der vorangegangenen Ansprüche, **dadurch gekennzeichnet, dass** der zweite Wulstdrückteil (4) in einer im Wesentlichen rechtwinkligen Richtung zur Drehachse (R) verläuft.

5. Maschine (M) gemäß einem oder mehr der vorangegangenen Ansprüche, **dadurch gekennzeichnet, dass** der zweite Wulstdrückteil (4) im Wesentlichen wie eine Rolle geformt ist.

## Revendications

1. Machine de changement de pneumatiques (M) comprenant des moyens d'attache et de rotation pour accrocher et pivoter la jante (C) d'une roue autour d'un axe de rotation (R), et un outil (1) pour monter/démonter les pneumatiques des roues des véhicules sur/de ladite jante (C), où ledit outil (1) comprend au moins un corps d'attache (2) au bras porte-outils (B) de ladite machine de changement de pneumatiques (M), et au moins un premier (3) et un deuxième (4) élément pousse-talon, avec ledit premier élément (3) qui est allongé selon une direction sensiblement orthogonale par rapport audit axe de rotation (R), aptes à coopérer ensemble pour déformer le talon d'un pneumatique qu'on doit monter/démonter sur/de ladite jante (C), où lesdits premier (3) et deuxième (4) éléments pousse-talon sont associés audit corps d'attache (2) par l'interposition de moyens de rotation (5, 7, 14) autour d'un axe de basculement sensiblement parallèle audit axe de rotation (R), ladite machine (M) en étant ***caractérisée en ce que*** lesdits moyens de rotation (5, 7) comprennent deux roues d'engrenage (14), placées susdit corps d'attache (2), qui peuvent pivoter autour d'un axe sensiblement parallèle audit axe de rotation (R), lesdites deux roues d'engrenage (14) en étant fixées ensemble et chacune en supportant respectivement un desdits éléments pousse-talon (3, 4), par lequel lesdits moyens de rotation (5, 7) sont aptes à permettre le réglage et le positionnement dudit premier élément pousse-talon (3) dans une configuration de travail dans laquelle il est sensiblement tangent par rapport à un des plis annulaires de ladite jante (C).

2. Machine (M) selon la revendication 1, ***caractérisée en ce que*** lesdits moyens de rotation (7, 5) sont associés à des moyens de fixage amovibles (15) de la rotation desdites roues d'engrenage (14).

3. Machine (M) selon la revendication 2, ***caractérisée en ce que*** lesdits moyens de fixage amovibles comprennent un pignon denté (15) associable audit corps d'attache (2) dans une configuration de blocage dans laquelle ledit pignon denté (15) est occupé simultanément avec les dents desdites roues d'engrenage (14).

4. Machine (M) selon l'une ou plusieurs des revendications précédentes, ***caractérisée en ce que*** ledit deuxième élément pousse-talon (4) est allongé selon une direction sensiblement orthogonale par rapport audit axe de rotation (R).

5. Machine (M) selon l'une ou plusieurs des revendications précédentes, ***caractérisée en ce que*** ledit deuxième élément pousse-talon (4) est sensiblement formé comme une roulette.
